Europäisches Patentamt

European Patent Office

Office européen des brevets

(11) Publication number: **0 212 821**
**B1**

# EUROPEAN PATENT SPECIFICATION

(45) Date of publication of the patent specification:
25.04.90

(21) Application number: **86305220.5**

(22) Date of filing: **07.07.86**

(51) Int. Cl.⁴: **G01F 15/00**

---

(54) **Gas meter and method of assembly.**

---

(30) Priority: **10.08.85 GB 8520137**

(43) Date of publication of application:
**04.03.87 Bulletin 87/10**

(45) Publication of the grant of the patent:
**25.04.90 Bulletin 90/17**

(84) Designated Contracting States:
**AT BE DE FR GB IT NL SE**

(56) References cited:
**DE-C- 408 637**
**FR-A- 1 142 154**
**GB-A- 2 097 937**

(73) Proprietor: **SMITH METERS LIMITED, 170, Rowan Road, Streatham Vale London, SW16 5JE(GB)**

(72) Inventor: **Wicher, Eugeniusz, 7, The Drive, Ewell Surrey, KT19 0AR(GB)**

(74) Representative: **Betteridge, Eileen Margaret, 170, Rowan Road, Streatham Vale London, SW16 5JE(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the mounting of a one-way valve in a gas meter.

It is known from GB-A 2 097 937 to mount a one-way valve in a gas-flow tube of a gas meter so as to prevent fraudulent attempts to reverse the direction of gas flow through the meter. The assembly of these meters is an awkward procedure involving putting the valve parts into a location which is difficult for access.

According to the invention a method of assembling a gas meter of the kind having a gas-flow tube (13) leading to an opening (21) in an internal wall (12) of the meter and a one-way valve (11) located to affect flow in said gas-flow tube is characterized by the steps of placing a compressible grommet (22) having a waisted outer circumference into said opening (21) so that the wall (12) seats in said waist, pushing the one-way valve (11) onto the grommet (22) from one side of the wall so that an opening (16) thereof also seats in said waist and pushing one end of said gas-flow tube (13) into the centre opening of the grommet (22) from the other side of the wall whereby to compress the grommet (22) and cause it to increase its grip on the wall (12), the valve (11) and the tube (13).

The invention also extends to a gas meter adapted for the method of assembly outlined above.

A specific example of the invention is illustrated in the accompanying drawings, in which:

Figure 1 is a top view of a one-way valve,
Figure 2 is a side sectional view of a top plate of the valve of Figure 1,
Figure 3 is a side view part in section of the valve of Figure 1,
and
Figure 4 is a partly diagrammatic side view of the valve of Figures 1 to 3 in the process of being mounted in a gas meter.

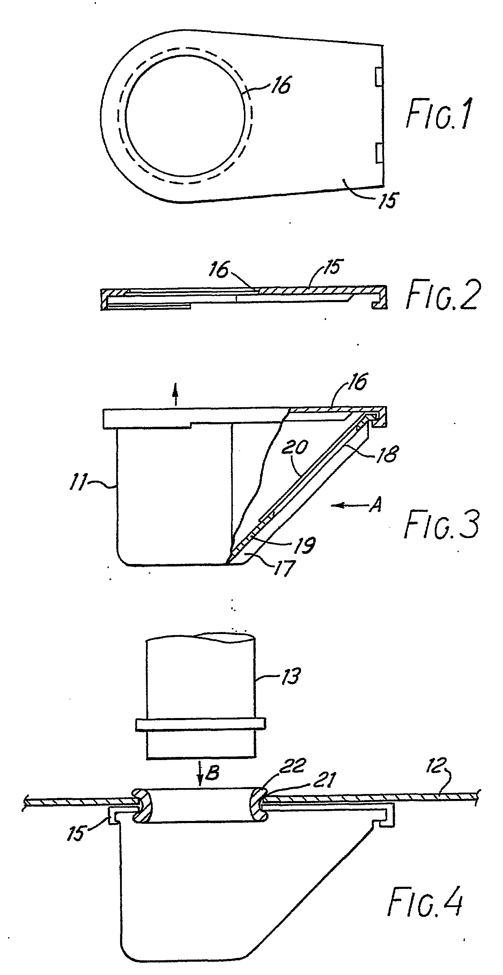

The valve shown is to be used in a gas meter to prevent reverse flow of gas as described in Patent No. 2097937, particularly in a similar manner to that shown in Figure 1 thereof. A one-way flap valve (11) is to be mounted in the gas meter at the conjunction of a valve chamber wall (12) and an exhaust tube (13). Normally gas flowing through the meter leaves by way of the exhaust tube which leads from a valve chamber housing the normal meter valves to an outlet boss. If the meter connections are reversed then gas may be made to flow down the exhaust tube into the valve chamber. To prevent this, one-way valve (11) closes when a reverse flow occurs.

The one-way valve as seen in Figures 1 to 3 comprises a top plate (15) having a circular opening (16), and a body member (17). Body member (17) is secured to the top plate and provides an internal gas flow path connected to opening (16) and turning through 90° to an opening (18) in an angled face (19). Face (19) lies at approximately 45° to the vertical. At the top edge of the face is secured the top edge of a flexible valve flap (20) made of reinforced nitrile rubber. The flap is large enough to cover opening (18) and seats on the face (19). There may be support strips (not shown) across the opening to support the flap.

Normally gas flows in the direction of arrow A and lifts the flexible flap off the seat, so as to establish a gas flow into opening (16). Because of the angle of the valve seat the flap tends to fall back to the closed position under gravity when there is no flow. Should a reverse gas flow be connected, the gas pressure will tend only to pressure the flap (20) more securely against its seat and support strips (where fitted). Thus there will be no gas flow.

Referring to Figure 4 there is shown the top wall (12) of a valve chamber having an opening (21) through which gas normally flows into exhaust tube (13). A compressible rubber grommet (22) has a waisted outer circumference in which the edges of opening (21) seat. Exhaust tube (13) is a tight fit in the inner opening of grommet (22) whereby in known arrangements the tube is both held and sealed.

To mount the one-way valve (11) the grommet (22) is first placed in the opening (21). The valve is then pushed onto grommet (22) so that the opening (16) is forced into the same waisted portion as opening (21) in the position shown in the drawing. In this position the valve is only lightly secured to wall (12), but sufficiently so for reasonable handling to take place. The exhaust tube (13) is then pushed down in the direction of arrow B so that it enters the grommet compressing the material of the grommet around the wall (12) and the plate (15) and thus effectively locking and sealing the valve (11) in position. It will be appreciated that by this means the valve is mounted without the need for any further components. All that is required is careful dimensioning of the grommet (22) with respect to the diameter of tube (13) so that insertion of tube (13) into the grommet compresses the grommet to cause it to grip the valve sufficiently well. The mounting of the valve is thus achieved cheaply and quickly without any difficult assembling procedures.

## Claims

1. A method of assembling a gas meter of the kind having a gas-flow tube (13) connected to an opening (21) in an internal wall (12) of the meter and a one-way valve (11) located to affect flow in said gas-flow tube characterized by the steps of placing a compressible grommet (22) having a waisted outer circumference into said opening (21) so that the wall (12) seats in said waist, pushing the one-way valve (11) onto the grommet (22) from one side of the wall so that an opening (16) thereof also seats in said waist and pushing one end of said gas-flow tube (13) into the centre opening of the grommet (22) from the other side of the wall whereby to compress the grommet (22) and cause it to increase its grip on the wall (12), the valve (11), and the tube (13).

2. A method as claimed in claim 1, in which said step of pushing the one-way valve (11) onto the grommet (22) further consists of pressing a flat top plate (15) of the valve into contact with the wall (12).

3. A gas meter of the kind having a gas-flow tube (13) connected to an opening (21) in an internal wall (12) of the meter and a one-way valve (11) located to affect flow in said gas-flow tube (13), whereby said one-way valve (11) is connected in line with said tube (13) characterized by said valve being mounted on the opposite side of the wall (12) to the tube (13) by a compressible grommet (22) having a wasted outer circumference, said opening (21) and an opening of the one-way valve (16) both seating in said waisted outer circumference, said tube (13) being inserted in the central opening of the grommet (22), the dimensions of the grommet (22), tube (13), and openings (21, 16) being such that the valve (11) alone is mounted by the grommet (22) on the wall (12) sufficiently well for handling to take place, and is secured more firmly in place by compression of the grommet (22) caused by the insertion of the tube (13) thereinto.

4. A gas meter as claimed in claim 3, further characterized by said one-way valve (11) having an internal gas flow path from its opening connecting with the tube (13) which path turns through an angle to terminate in an opening (18) and a flexible valve flap (20) which is capable of covering the opening, the opening (18) lying in use at an angle such that the flexible valve flap (20) tends to fall under gravity to cover it.

5. A gas meter as claimed in claim 4, further characterized by said flap (20) being of nitrile rubber.

**Patentansprüche**

1. Verfahren zum Zusammenbauen eines Gaszählers der Art mit einem Gasdurchfluß-Rohr (13), das mit einer Öffnung (21) in einer Innenwand (12) des Zählers verbunden ist, und mit einem Einweg-Ventil (11), das so angeordnet ist, daß es die Strömung in dem genannten Gasdurchfluß-Rohr beeinflußt, gekennzeichnet durch die folgenden Schritte: Einsetzen einer zusammendrückbaren Hülse (22) mit einem eingeschnürten Außenumfang in die genannte Öffnung (21) auf eine solche Weise, daß die Wand (12) in der genannten Einschnürung liegt, Drücken des Einweg-Ventils (11) von einer Seite der Wand auf eine solche Weise auf die Hülse (22), daß sich eine Öffnung (16) derselben ebenfalls in der Einschnürung befindet, und Drücken des einen Endes des genannten Gasdurchfluß-Rohres (13) von der anderen Seite der Wand auf eine solche Weise in die Mittelöffnung der Hülse (22), daß die Hülse (22) zusammengedrückt wird, so daß die genannte Hülse (22) die Wand (12), das Ventil (11) und das Rohr (13) verstärkt festhält.

2. Verfahren nach Anspruch 1, worin der genannte Schritt des Drückens des Einweg-Ventils (11) auf die Hülse (22) außerdem das Drücken einer Platte (15) des Ventils mit einer flachen Oberseite in Kontakt mit der Wand (12) beinhaltet.

3. Gaszähler der Art mit einem Gasdurchfluß-Rohr (13), das mit einer Öffnung (21) in einer Innenwand (12) des Zählers verbunden ist, und mit einem Einweg-Ventil (11), das so angeordnet ist, daß es die Strömung in dem genannten Gasdurchfluß-Rohr (13) beeinflußt, wobei das genannte Einweg-Ventil (11) fluchtend mit dem genannten Rohr (13) verbunden ist, dadurch gekennzeichnet, daß das genannte Ventil an der gegenüberliegenden Seite der Wand (12) durch eine zusammendückbare Hülse (22) mit einem eingeschnürten Außenumfang an dem Rohr (13) befestigt ist, wobei sich sowohl die genannte Öffnung (21) als auch eine Öffnung des Einweg-Ventils (16) in dem genannten eingeschnürten Außenumfang befinden, wobei das genannte Rohr (13) in die Mittelöffnung der Hülse (22) eingesetzt wird, wobei die Abmessungen der Hülse (22), des Rohrs (13) und der Öffnungen (21, 16) so gewählt sind, daß das Ventil (11) alleine durch die Hülse (22) so gut an der Wand (12) festgehalten wird, daß Raum zum Bedienen vorhanden ist, und fester durch das Zusammendrücken der Hülse (22) an seinem Platz gehalten wird, das durch das Einsetzen des Rohres (13) in diese verursacht wird.

4. Gaszähler nach Anspruch 3, weiter dadurch gekennzeichnet, daß das genannte Einweg-Ventil (11) einen internen Gasdurchflußweg von seiner mit dem Rohr (13) verbundenen Öffnung aufweist, wobei der Weg in einem Winkel verläuft und in einer Öffnung (18) endet, und eine flexible Ventilklappe (20) aufweist, die die Öffnung verdecken kann, wobei die Öffnung (18) bei Gebrauch in einem solchen Winkel angeordnet ist, daß die flexible Ventilklappe (20) geneigt ist, unter Schwerkraft herabzufallen, um sie zu verdecken.

5. Gaszähler nach Anspruch 4, weiter dadurch gekennzeichnet, daß die genannte Klappe (20) aus Nitrilgummi besteht.

**Revendications**

1. Méthode pour assembler un débitmètre à gaz ayant un tube (13) d'écoulement de gaz, relié à un orifice (21) dans une paroi interne (12) du débitmètre et un clapet anti-retour (11) placé de manière à imposer le sens d'écoulement dans ledit tube, cette méthode consistant à placer une bague compressible (22), de section centrale externe circulaire, dans ledit orifice (21) pour que la paroi (12) s'appuie dans ladite section centrale, en poussant le clapet anti-retour (11) sur la bague (22), depuis un coté de la paroi, afin que l'orifice (16) de celle-ci s'appuie aussi dans ladite section centrale, et en poussant une extrémité dudit tube à gaz (13) dans l'ouverture centrale de la bague (22), depuis l'autre coté de la paroi afin de comprimer la bague (22) et d'augmenter sa prise sur la paroi (12), le clapet (11) et le tube (13).

2. Méthode, conforme à la revendication 1, dans laquelle, pour pousser le clapet anti-retour (11) sur la bague (22), on appuie une plaque supérieure plate (15) du clapet pour la mettre en contact avec la paroi (12).

3. Débitmètre à gaz ayant un tube d'écoulement de gaz (13) relié à un orifice (21) dans une paroi interne (12) du débitmètre et un clapet anti-retour (11) placé pour imposer le sens d'écoulement dans ledit tube (13), ledit clapet (11) étant raccordé en ligne avec ledit tube (13), ledit clapet étant monté du coté opposé de la paroi (12) sur le tube (13) à l'aide d'une bague compressible (22), de section centrale externe circulaire, ledit orifice (21) et l'orifice du clapet anti-retour (16) s'appuyant tous les deux dans la section centrale externe circulaire, ledit tube (13) étant introduit dans l'ouverture centrale de la bague (22), les dimensions de la bague (22), du tube (13) et des orifices étant telles que seul le clapet (11) est suffisamment maintenu en place sur la paroi (12) par la bague (22), et que ce clapet (11) est plus solidement maintenu en place par la compression de la bague (22) résultant de l'introduction du tube (13) dans celle-ci.

4. Débitmètre à gaz, conforme à la revendication 3, dans lequel le dit clapet anti-retour (11) possède un circuit interne d'écoulement du gaz à partir de son orifice de raccordement avec le tube (13), ce circuit faisant un angle pour aboutir à un orifice (18) et à un capuchon flexible de soupape (20) pouvant ouvrir l'orifice, cet orifice (18) étant disposé, en cours de service, suivant un angle tel que le capuchon flexible (20) tende à tomber sous l'effet de la gravité pour le recouvrir.

5. Débitmètre à gaz, conforme à la revendication 4, dans lequel le capuchon (20) est en caoutchouc nitrile.

FIG.1

FIG.2

FIG.3

FIG.4